Europäisches Patentamt

(19) European Patent Office

Office européen des brevets

(11) Veröffentlichungsnummer: **0 041 758**
**B1**

(12) EUROPÄISCHE PATENTSCHRIFT

(45) Veröffentlichungstag der Patentschrift:
**21.09.83**

(21) Anmeldenummer: **81200614.6**

(22) Anmeldetag: **03.06.81**

(51) Int. Cl.³: **C 01 F 11/46,** C 01 B 25/22,
G 21 F 9/10

(54) Verfahren zur Verminderung der Radioaktivität von aus Phosphoriten hergestelltem Calciumsulfat.

(30) Priorität: **11.06.80 DE 3021839**

(43) Veröffentlichungstag der Anmeldung:
**16.12.81 Patentblatt 81/50**

(45) Bekanntmachung des Hinweises auf die Patenterteilung:
**21.09.83 Patentblatt 83/38**

(84) Benannte Vertragsstaaten:
**BE DE FR GB IT NL SE**

(56) Entgegenhaltungen:
**DE-B-2 218 382**
**GB-A-1 394 734**

(73) Patentinhaber: **CHEMISCHE WERKE HÜLS AG,
Postfach 1320, D-4370 Marl 1 (DE)**

(72) Erfinder: **Kurandt, Hans-Friedrich, Dr.,
Wilhelm-Reinecke-Strasse 6, D-2120 Lüneburg (DE)**

(74) Vertreter: **Steil, Hanna, Dipl.-Chem., RSP PATENTE -
PB 15 Postfach 1320, D-4370 Marl 1 (DE)**

Verfahren zur Verminderung der Radioaktivität von aus Phosphoriten hergestelltem Calciumsulfat

Die Radioaktivität von aus Phosphoriten hergestelltem Calciumsulfat lässt sich dadurch vermindern, dass man nach oder bei dem Säureaufschluss des Phosphorits und vor dem Fällen des Calciumsulfats jeweils starke Salpeter- oder Salzsäure und Ammonsalze, insbesondere Ammonnitrat oder -phosphat, zusetzt.

Zur Herstellung von Düngemitteln und Phosphorsäure werden Rohphosphat verwendet. Während der kleinere Teil der Phosphate magmatischen Ursprungs ist (Apatite), besteht der grössere Teil der auf der Erde gefundenen Phosphate aus Sedimentphosphaten (Phosphorite).

Apatite sind praktisch nicht radioaktiv, während Phosphorite eine, wenn auch schwache Radioaktivität besitzen, die je nach Phosphatsorte gewissen Schwankungen unterliegt. Diese Radioaktivität ist auf den Urangehalt der Phosphorite zurückzuführen bzw. auf die durch den Uranzerfall sich ergebenden Radiumgehalte. – Bei der üblichen Herstellung von Phosphorsäure durch Aufschluss von Phosphoriten mit Schwefelsäure wird das im Phosphat vorhandene Radium praktisch vollständig zusammen mit dem Calciumsulfat als schwerlösliches Radiumsulfat $RaSO_4$ im Prozess abgetrennt und verbleibt im Sulfat-Niederschlag, während das Uran in der Phosphorsäure gelöst bleibt, die vorwiegend zu Düngemitteln aufgearbeitet wird.

Eine geringe Radioaktivität in einem Düngemittel kann wegen des weiträumigen Verteilens beim Aufbringen auf den Acker praktisch keine Strahlungsschäden auslösen. Hinzu kommt, dass der Radiumanteil infolge der ausserordentlich niedrigen Löslichkeit des $RaSO_4$ im Boden festgelegt bleibt, also von der Pflanze nicht aufgenommen wird. Gesundheitsschäden können durch Düngemittel daher nie verursacht werden.

Bei den Gipsprodukten stört die durch die Anwesenheit von $RaSO_4$ bedingte Radioaktivität nicht, falls der Gips – wie allgemein üblich – ins Meer gespült oder auf Halde gegeben wird. Die Radioaktivität stört ferner dann nicht, wenn der Phosphorsäuregips als Abbindeverzögerer dem Zement untergemischt wird, da gewöhnlich nur 3 bis 5% $CaSO_4$ dem Zement zugemischt werden. Infolge dieser Verdünnung kann die Radioaktivität des Zements im allgemeinen vernachlässigt werden. – Störend kann die Radioaktivität des Phosphorsäuregipses jedoch immer dann sein, wenn der Gips direkt für Bauzwecke verwendet wird, z.B. zur Produktion von Gipswandplatten, Gipskartonplatten oder Gipssteinen. Bei Gipsputzen spielt die Radioaktivität infolge der geringeren zugesetzten Gipsmenge keine so grosse Rolle wie bei den oben angeführten Bauelementen.

Um eine vielseitige Verwendbarkeit des Phosphorsäuregipses zu gewährleisten, ist eine Verminderung der Radioaktivität wünschenswert. In dem vom Bundesinnenministerium geförderten Bericht «Die Strahlenexposition von aussen in der Bundesrepublik Deutschland durch natürliche radioaktive Stoffe im Freien und in Wohnungen, unter Berücksichtigung des Einflusses von Baustoffen» ist unter anderem auch die Radioaktivität von Baustoffen angegeben worden.

Danach erreichen die meisten aus Phosphorit angeführten Chemiegipse eine Radioaktivität zwischen 10 und 25 nCi/kg, einige liegen über 25 nCi/kg. Diskutiert werden auf S. 28 des Berichtes folgende Grenzwerte für Baustoffe:

Radium und Thoriumgehalte
< 10 nCi/kg – freie Verwendung
10–25 nCi/kg – Anzeigepflicht
> 25 nCi/kg – Zulassungspflicht.

Durch diesen Bericht ergibt sich also die Aufgabe, ein Arbeitsverfahren für die Herstellung von Baugips zu entwickeln, bei dem man auch bei Verwendung von relativ viel Uran enthaltenden Phosphoriten einen Phosphorsäuregips mit einer Radioaktivität von <10 nCi/kg erhält. – Überraschenderweise konnte diese Aufgabe dadurch gelöst werden, dass man der Aufschlussmasse des Phosphorsäureprozesses vor der Fällung des Calciumsulfats ein Gemisch aus starker Salpeter- oder Salzsäure und aus Ammonsalzen, insbesondere Ammonnitrat- oder -phosphat, zusetzt.

Im allgemeinen wird man so verfahren, dass man der Aufschlussmasse vor der Fällung des Calciumsulfats die erfindungsgemässen Zusätze beifügt, dann die Fällung des Gipses durch Zufügen von Schwefelsäure oder Sulfaten herbeiführt und dann den Niederschlag bei Temperaturen von 60 bis 110°C 1 bis 10 h lang digeriert und anschliessend die Phosphorsäure abfiltriert.

Falls man Schwefelsäure zum Aufschluss genommen hat, wird der Calciumgehalt des Phosphorits sofort in Calciumsulfat überführt. In diesem Fall wird das Digerieren vorzugsweise 5 bis 10 h lang durchgeführt werden müssen. Es ist jedoch auch möglich, die starke Mineralsäure und die Ammonsalze bereits zu Beginn des Aufschlusses zuzusetzen. – Die zuzusetzenden Säuren sollen in konzentrierter Form eingesetzt werden, die Salzsäure also vorzugsweise in Konzentrationen von mehr als 32% und die Salpetersäure mindestens als 40%ige, vorzugsweise als 65%ige $HNO_3$, gegebenenfalls auch in Form von sogenannter Hoko d.h. mehr als 99%iger $HNO_3$.

Da die abgetrennte Phosphorsäure meistens zur Düngemittelherstellung verwendet wird, empfiehlt sich vorzugsweise der Einsatz von Salpetersäure und von Ammoniumnitrat oder Ammoniumphosphat als Ammoniumsalze.

Die Ammoniumsalze können auch in der Aufschlusslösung selbst durch Zugabe von Ammoniak zu dem Säuregemisch erzeugt werden.

Das produzierte Calciumsulfat kann je nach den Reaktionsbedingungen (Temperatur und Konzentration der Säure) als Dihydrat, Hemihydrat oder Anhydrit gefällt und abgetrennt werden.

Die Radioaktivität der so hergestellten Baugipse liegt unter 10 nCi/kg. Im einzelnen wurden mit dem erfindungsgemässen Verfahren die folgenden Ergebnisse erzielt:

| Phosphatsorte | Calciumsulfat, hergestellt mit | | |
|---|---|---|---|
| | normalem Phosphorsäureverfahren | HNO₃ ohne Ammonsalze | erfindungsgemässem Verfahren |
| | Radioaktivität jeweils in nCi/kg | | |
| Florida-Phosphat | 20 | 13 | 6 |
| North-Carolina-Phosphat | 21 | – | 7 |
| Marokko-Phosphat | 31 | 19 | 9 |
| Taiba-Phosphat | 17 | 12 | 6 |
| Togo-Phosphat | 20 | 14 | 7 |
| Kola-Phosphat (Apatit) | 2 | – | 1 |

Der Wassergehalt betrug bei allen Produkten ca. 20% (das entspricht dem Wassergehalt bei trockenem Dihydrat).

Das erfindungsgemässe Verfahren wird durch folgende Beispiele näher erläutert, ohne dass damit eine Beschränkung auf nur diese Beispiele vorgenommen wird.

Beispiel 1
Bei der Herstellung von Phosphorsäure wurden 3 t Togo-Phosphat in üblicher Weise mit einem Gemisch aus 2700 kg Schwefelsäure (96%) und ca. 3000 l Filterrücklaufsäure aufgeschlossen, dem Aufschluss 600 kg HNO₃, 40%ig, zugegeben sowie 300 kg Monoammonphosphat. Die Radioaktivität des abfiltrierten und getrockneten Gipses lag bei 7 nCi/kg Gips, während der Gips beim normalen Phosphorsäureprozess ohne die erfindungsgemässen Zusätze eine Radioaktivität von 20 nCi/kg hatte.

Beispiel 2
Bei der Herstellung von Phosphorsäure wurden 3 t Marokko-Phosphat in üblicher Weise mit einem Gemisch aus 3000 kg Schwefelsäure (96%) und 3000 l Filterrücklaufsäure aufgeschlossen. Dem Aufschluss wurden 1000 kg HNO₃, 60%ig, zugegeben und vor der Filtration 120 kg NH₃ eingeleitet. Das Calciumsulfat wurde als Hemihydrat abgetrennt. Die Radioaktivität lag bei 9 nCi/kg, während der normale, beim Phosphorsäureprozess ohne die genannten Zusätze anfallende Gips eine Radioaktivität von 31 nCi/kg besass.

Beispiel 3 (nicht erfindungsgemäss)
Arbeitet man wie in Beispiel 2, jedoch ohne Zusatz von NH₃, so erhält man ein Calciumsulfat mit einer Radioaktivität von 19 nCi/kg, also eine etwa doppelt so hohe Radioaktivität wie im erfindungsgemässen Beispiel 2.

**Patentansprüche**

1. Verfahren zur Verminderung der Radioaktivität von aus Phosphoriten hergestelltem Calciumsulfat, dadurch gekennzeichnet, dass man der Aufschlussmasse des Phosphorsäureprozesses vor dem Fällen des Calciumsulfats ein Gemisch aus starker Salpeter- oder Salzsäure und aus Ammonsalzen, insbesondere Ammonnitrat oder Ammonphosphat, zusetzt.

2. Verfahren nach Anspruch 1, dadurch gekennzeichnet, dass man die Ammonsalze im Phosphorsäureprozess durch Zugabe von Ammoniak zum Säuregemisch erzeugt.

**Claims**

1. Process for reducing the radioactivity of calcium sulphate prepared from phosphorites, characterised in that a mixture of strong nitric acid or hydrochloric acid and of ammonium salts, especially ammonium nitrate or ammonium phosphate, is added to the digested composition from the phosphoric acid process before precipitating the calcium sulphate.

2. Process according to Claim 1, characterised in that the ammonium salts are produced in the phosphoric acid process by addition of ammonia to the acid mixture.

**Revendications**

1. Procédé de réduction de la radioactivité du sulfate de calcium obtenu à partir de phosphorite, caractérisé en ce que l'on ajoute à la masse de décomposition de l'opération d'obtention d'acide phosphorique, avant la précipitation du sulfate de calcium, un mélange d'acide fort, nitrique ou chlorhydrique, et de sels d'ammonium, en particulier de nitrate ou de phosphate d'ammonium.

2. Procédé selon la revendication 1, caractérisé en ce que l'on produit les sels d'ammonium dans le prodécé à l'acide phosphorique, par addition d'ammoniac au mélange d'acide.